# FASCICULE DE BREVET EUROPEEN

(11) **EP 1 017 509 B1**
(45) Date de publication et mention de la délivrance du brevet: **16.07.2003**
(21) Numéro de dépôt: 98942797.6
(22) Date de dépôt: 28.08.1998
(51) Int. Cl.: C03C 25/28, C03C 25/14

(54) **PROCEDE ET UTILISATION D'UN DISPOSITIF POUR LE REVETEMENT D'UN ELEMENT FILAIRE PAR UNE COUCHE FINE D'AGENT LIQUIDE ET FIBRE OPTIQUE AINSI REVETUE**
VERFAHREN UND VERWENDUNG EINER VORRICHTUNG ZUM BESCHICHTEN LANGGESTRECKTER GEGENSTÄNDE MIT DÜNNEN SCHICHTEN VON MITTELN UND BESCHICHTETE OPTISCHE FASER
METHOD AND USE OF A DEVICE FOR COATING A WIREFRAME ELEMENT WITH A FINE LIQUID AGENT DEPOSIT AND COATED OPTICAL FIBRE

(30) Priorité: 01.09.1997 FR 9711037
(43) Date de publication de la demande: 12.07.2000
(73) Titulaire: FRANCE TELECOM, 75015 Paris (FR)
(72) Inventeur: MORGAND, Annie, F-22300 Lannion (FR); DESAUNAY, Jean-Louis, F-22700 Saint-Quay Perros (FR); RUELLO, Yves, F-22300 Lannion (FR)
(74) Mandataire: Vidon, Patrice
(86) Numéro de dépôt international: FR9801865
(87) Numéro de publication internationale: WO99011391

(56) Documents cités:
- EP-A- 0 105 172
- WO-A-95/02004
- US-A- 4 606 870
- PATENT ABSTRACTS OF JAPAN vol. 016, no. 411 (C-0979), 31 août 1992 & JP 04 139038 A (SUMITOMO ELECTRIC IND LTD), 13 mai 1992

## Description

L'invention concerne le domaine de la fabrication des éléments filaires revêtus d'au moins une couche fine d'un revêtement, tel que notamment un matériau de protection.

L'invention trouve notamment, mais non exclusivement, son application dans le domaine de la fabrication des fibres optiques.

Les fibres optiques sont constituées de silice et comportent de nombreuses microfissures à leur surface. Lorsque ces fibres sont placées sous contrainte (par exemple lorsqu'elles sont courbées) ces fissures se propagent et peuvent provoquer la rupture de la fibre. Ce phénomène est particulièrement accentué si la fibre se trouve dans un environnement humide. Il est donc nécessaire de protéger les fibres de silice d'un revêtement protecteur hydrophobe afin d'augmenter leur facteur "n" de corrosion sous contrainte. Ce facteur "n" rend compte de l'étanchéité et donc de la durée de vie des fibres : celle-ci sera d'autant plus grande que le facteur "n" sera important.

Les fibres optiques classiques sont généralement pourvues d'un double revêtement polymère à base acrylate (un revêtement primaire souple revêtu d'un revêtement secondaire rigide) et présentent un facteur "n" d'environ 20. Un tel double revêtement présentant l'inconvénient d'être relativement perméable à l'eau, divers industriels ont cherché soit à le rendre moins perméable, soit à déposer une couche mince étanche sous celui-ci.

En ce qui concerne les recherches portant sur l'imperméabilisation du revêtement, les développements en cours connus à ce jour concernent ainsi:
- l'utilisation d'un revêtement primaire contenant un promoteur d'adhésion qui améliore la tenue de la fibre à l'eau et à l'humidité. Ce revêtement primaire est revêtu d'un revêtement secondaire classique et permettrait l'obtention d'un facteur "n" de 30 ;
- l'utilisation d'un revêtement secondaire fluoré dans lequel le greffage d'atomes de fluor, élément hydrophobe, sur les oligomères uréthane-acrylate présents dans la résine de base permet d'améliorer la tenue à l'eau et à l'humidité de la fibre. Le facteur "n" obtenu grâce à un tel procédé est de l'ordre de 40.

Toutefois, ces deux revêtements semblent présenter encore une certaine sensibilité à l'humidité.

En ce qui concerne les recherches portant sur l'utilisation d'une couche mince étanche, les matériaux étanches actuellement proposés sont constitués notamment par :
- des céramiques tels que les carbures et nitrures de silicium, les carbures de titane ;
- certains métaux tels que l'aluminium, le zinc, le cuivre...;
- le carbone.

Une telle couche mince présente généralement une épaisseur de quelques dizaines de nanomètres et est protégée par un double revêtement classique présentant une épaisseur minimale de 40 µm. Ce type de dépôt étanche permet d'obtenir un facteur "n" supérieur à 100.

L'utilisation de tels matériaux d'étanchéification, en particulier le carbone, est toutefois aujourd'hui difficilement économiquement envisageable pour la fabrication des fibres optiques destinées aux réseaux de distribution ; un important complément d'industrialisation est nécessaire pour réduire leur coût de mise en oeuvre.

En ce qui concerne les procédés de fabrication des fibres optiques connus de l'état de la technique, le double revêtement protecteur cité ci-dessus est une résine photopolymérisable déposée sur la silice au moyen de filières pressurisées de diamètre défini en fonction des épaisseurs à déposer. La fibre de silice défile au centre de ces filières alimentées de résine en continu. Les résines utilisées sont visqueuses (quelques milliers de mPa.s) pour éviter tout écoulement hors de la filière. Ce type de procédé n'est pas adapté aux dépôts d'épaisseur inférieure à 10 µm car, pour de très faibles épaisseurs les risques de frottements de la fibre sur les parois de la filière sont importants.

Les céramiques ou le carbone utilisés pour étanchéifier la fibre sont quant à eux déposés par un procédé très particulier : le procédé "CVD" (Chemical Vapor Deposition). Un tel procédé nécessite l'emploi de réactants gazeux. Les métaux sont quant à eux déposés fondus sur la silice. Leur refroidissement provoque des microcourbures et donc de fortes atténuations (10 dB/km). De plus, la vitesse du dépôt est limitée par le temps de refroidissement du métal.

On notera par ailleurs qu'afin de pouvoir s'adapter au génie civil existant, les câbles de fibres optiques destinés aux futurs réseaux de distribution doivent présenter une structure très compacte. Dans le but d'augmenter cette compacité tout en permettant une bonne protection des fibres, il est souhaitable de protéger celles-ci avec une couche de revêtement la plus fine possible présentant de bonnes qualités d'adhésion à la silice tout en offrant une bonne résistance à l'eau et à l'humidité.

Un objectif de la présente invention est donc de proposer un procédé d'application d'une résine sur fibre permettant de diminuer le diamètre d'une fibre optique tout en améliorant son facteur "n" de corrosion sous contrainte.

Encore un objectif de l'invention est de divulguer un tel procédé qui élimine le risque de frottement et de fragilisation de la fibre optique lors du dépôt du revêtement.

Egalement un objectif de la présente invention est de proposer un procédé qui puisse utiliser d'autres résines et/ou avoir d'autres applications que l'application aux fibres optiques, telles que le dépôt de revêtements fins, soit adhérisants, soit de découplage (colorés ou non), le dépôt d'agents de traitement de surfaces ou encore d'encres de coloration, sur tout type d'élément filaire.

Un autre objectif de la présente invention est de proposer l'utilisation d'un dispositif pour la mise en oeuvre d'un tel procédé pouvant être très facilement intégré aux tours de fibrage de l'état de la technique utilisées pour la fabrication des fibres optiques. A ce sujet, on notera que les tours de fibrage de l'état de la technique sont classiquement constituées par un four de ramollissement de la préforme, suivi d'un système de refroidissement, d'un mesureur de diamètre de la silice, d'au moins une filière de dépôt d'un revêtement, d'au moins un four de séchage du revêtement, d'un mesureur de diamètre de la fibre revêtue et d'un dispositif permettant de récupérer et d'enrouler la fibre.

Ces différents objectifs sont atteints grâce à l'invention qui concerne un procédé de dépôt d'au moins une couche fine d'un agent liquide sur un élément filaire destinée à former un, revêtement hydrophobe sur ledit élément filaire, procédé défini dans la revendication 1.

L'invention propose donc d'utiliser la pulvérisation d'un agent liquide sur un élément filaire pour permettre le revêtement de celui-ci d'une fine couche d'un tel agent et présente l'avantage de supprimer tout contact entre l'élément filaire et les moyens de dépôt de l'agent liquide.

A ce sujet, on notera que la pulvérisation est un moyen de projection très utilisé pour le dépôt de films liquides sur substrats de dimensions importantes ou pour le marquage d'autres objets présentant de grandes surfaces. Les procédés de pulvérisation de l'état de la technique étant mis en oeuvre sur des grandes surfaces de substrat, ils impliquent en effet peu ou pas de perte du produit pulvérisé. Leur utilisation pour des éléments filaires, pour lesquels d'importantes pertes du produit pulvérisé auraient été à craindre, n'était donc pas évidente.

On notera également que la littérature fait par ailleurs état de quelques procédés d'enduction de fils par des agents liquides.

Un de ces procédés consiste à mettre en oeuvre le passage d'un fil sur des rouleaux encreurs. Un tel procédé présente l'inconvénient d'impliquer un contact avec le fil le rendant inadapté pour le dépôt d'une résine sur des fibres telles que des fibres de silice (fragilisation, électrostatisme).

Un autre procédé consiste à mettre en oeuvre le passage du fil dans un bain horizontal. Un tel procédé est complètement inadapté au dépôt de revêtements sur des fibres optiques qui mettent en oeuvre un défilement vertical.

Encore un autre procédé consiste à mettre en oeuvre le passage du fil dans un bain vertical, le fil étant tiré vers le haut pour éviter l'écoulement du liquide hors du bain. Les tours de fibrage classiques de l'état de la technique mettant en oeuvre un défilement de la fibre par gravité, il ne pourrait être adapté sur de telles tours.

Enfin, on notera également qu'il a déjà été proposé dans l'état de la technique un procédé consistant à effectuer un dépôt de résine polymérisable fluide sur fibre de silice en défilement par tamponnage. Cette méthode a été abandonnée suite à des problèmes d'électrostatisme et de centrage de la silice dans son revêtement pour les grandes vitesses de fibrage. Il se produisait en effet une polymérisation prématurée de la résine avant l'obtention d'une répartition homogène de celle-ci autour de la silice.

Le document Patent Abstracts of Japan, vol. 016, no. 411 (c-0979), 3i.8.92, & JP-A-04 139 038 décrit le dépôt d'un film de résine sur une fibre optique par pulvérisation.

Lorsque l'on souhaitera obtenir une couche d'agent liquide d'épaisseur particulièrement faible, notamment dans le cadre du revêtement de fibres de silices avec un réactant liquide, l'agent liquide utilisé pourra présenter une viscosité inférieure à 100 mPa.s. L'utilisation d'un agent liquide présentant une viscosité faible permet de pulvériser des microgouttelettes permettant d'obtenir un meilleur mouillage de l'élément filaire et autorise l'obtention de couches fines d'épaisseur plus faible que dans l'état de la technique de dépôt par filière pressurisée.

Egalement selon une variante de mise en oeuvre du procédé, la pulvérisation dudit agent liquide sur ledit élément filaire est effectuée sous forme d'un jet essentiellement conique formant un angle α avantageusement compris entre 1° et 10°. Un tel mode de projection permet d'obtenir une répartition très uniforme de la couche d'agent liquide déposée sur l'élément filaire et d'assurer le dépôt même si la fibre se déplace en cours de fibrage.

Avantageusement, ladite pulvérisation dudit agent liquide est effectuée à une distance comprise entre 1 mm et 20 mm dudit élément filaire et en utilisant une pression dudit agent liquide préférentiellement comprise entre 0,1 et 2 bar.

Selon une variante intéressante de l'invention, le procédé comprend une étape consistant à déterminer la pression minimum de pulvérisation dudit agent liquide pour laquelle ledit jet conique de pulvérisation est correctement formé, une étape consistant à déterminer la pression maximum de pulvérisation dudit agent liquide pour laquelle ledit élément filaire se met à vibrer sous l'effet de la pulvérisation et une étape consistant à fixer une pression optimale de pulvérisation compris entre ladite pression minimum et ladite pression maximum et choisie en fonction de la vitesse de défilement dudit élément filaire. On entend par pression optimale, la pression à laquelle l'élément filaire ne vibre pas et pour laquelle une couche d'épaisseur voulue est réalisée à la vitesse de défilement souhaitée.

Comme déjà précisé, on comprendra que le procédé selon l'invention pourra être mis en oeuvre pour traiter tout type d'élément filaire. Toutefois, le procédé selon l'invention est particulièrement adapté pour le revêtement des fibres optiques en silice par un agent liquide constitué par un réactant liquide polymérisable. On utilise dans le cadre de la mise en oeuvre du procédé un réactant liquide constitué par :
- au moins un composé acrylophosphoré ou méthacrylophosphoré de formule générale (I) ou de formule générale (II): 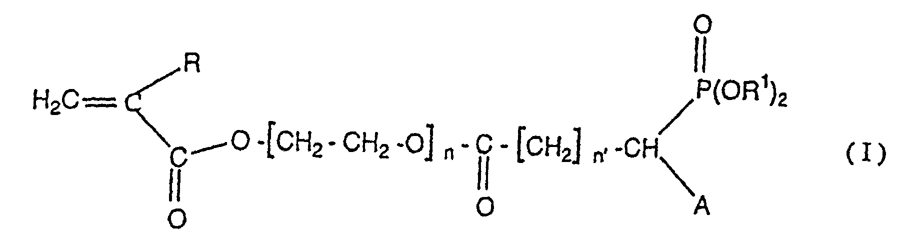 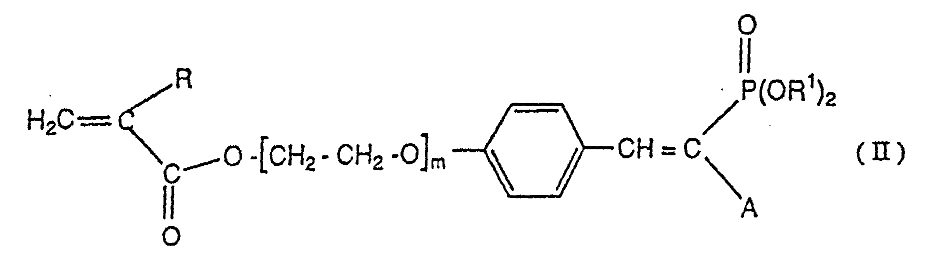 dans lesquelles,
   R représente un atome d'hydrogène ou un reste alkyle, linéaire ou ramifié, ayant un nombre d'atomes de carbone allant de 1 à 3, et de préférence soit un atome d'hydrogène soit un radical méthyle ;
   R¹ représente un reste alkyle, linéaire ou ramifié ayant un nombre d'atomes de carbone allant de 1 à 4 et de préférence un radical CH₃- ou un radical CH₃CH₂- ;
   A représente un atome d'hydrogène ou un reste alkyle, linéaire ou ramifié ayant un nombre d'atomes de carbone allant de 1 à 3 ou un autre groupement phosphonate - P(O)(OR¹)₂ et représente de préférence -P(O)(OCH₃)₃ ou -P(O)(OEt)₂;
   n et n' sont des nombres qui peuvent prendre des valeurs identiques ou différentes égales à 1, 2 ou 3 ;
   m peut être égal à 0, 1, 2 ou 3.
- au moins un diluant acrylate.

Il a en effet été découvert que les composés de formules générales (I) ou (II) présentent des qualités adhésives améliorées vis-à-vis de la silice et permettent ainsi d'améliorer le facteur "n" de la fibre en utilisant des épaisseurs très faibles de dépôt (quelques centaines de nanomètres à quelques micromètres).

Préférentiellement, ledit composé est choisi dans le groupe constitué par les composés de formules :

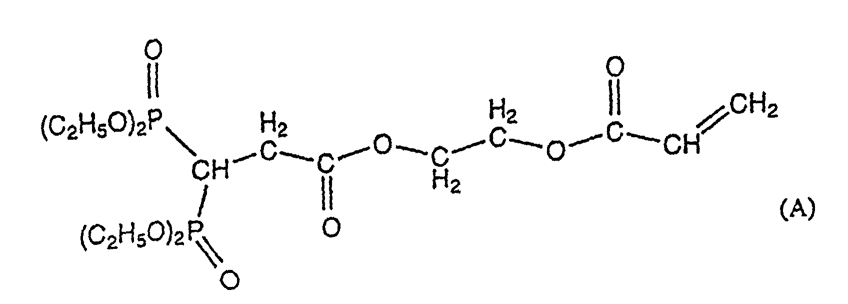

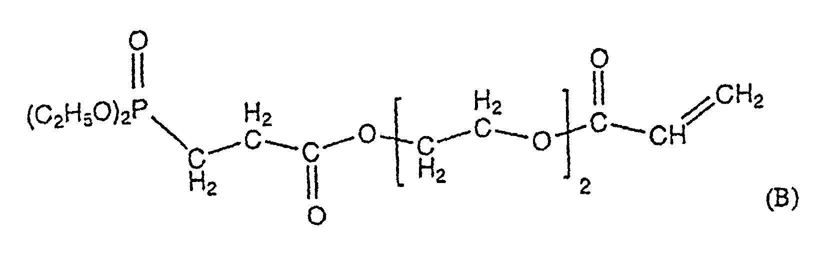

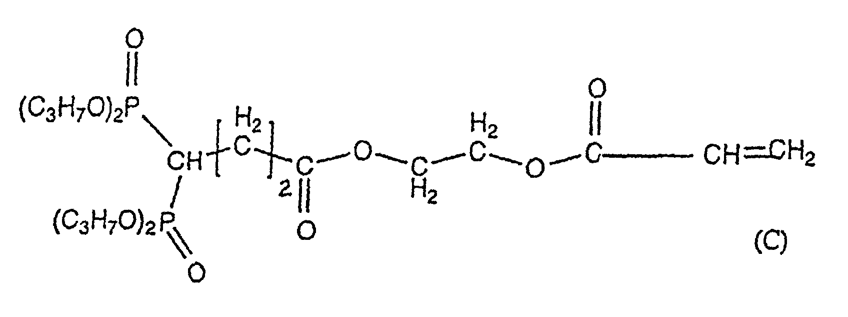

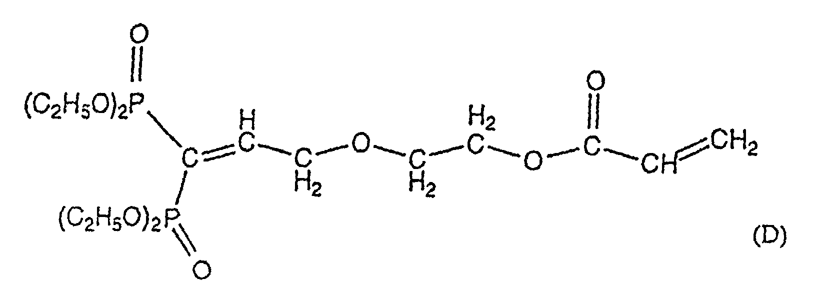

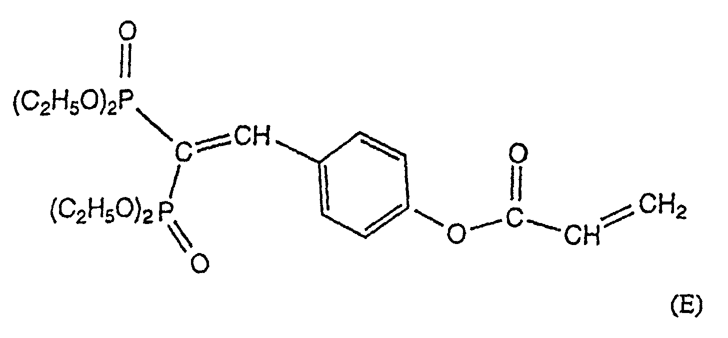

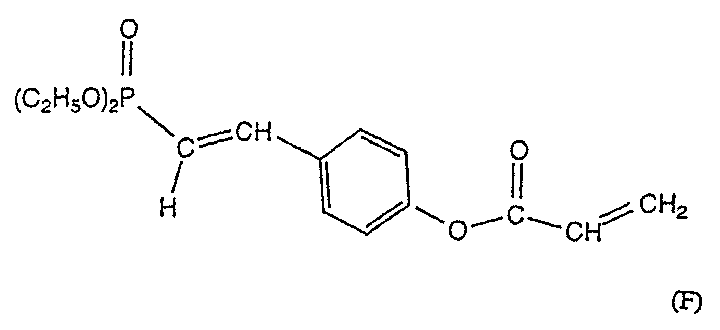

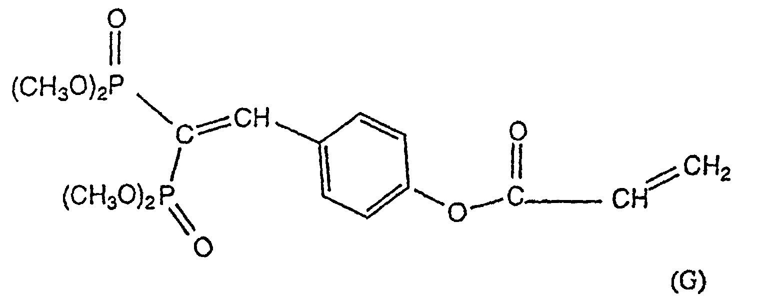

Bien que l'on pourra envisager d'utiliser tout type de diluant acrylate pour réaliser le réactant liquide cité ci-dessus, celui-ci sera avantageusement choisi dans le groupe constitué par la phénoxyéthylétheracrylate, l'éthoxyéthylacrylate, l'éthoxyéthoxyéthylacrylate, la triméthylolpropanetriacrylate, l'isobornylacrylate.

Selon une variante préférentielle de l'invention, ledit agent liquide utilisé est un réactant liquide photopolymérisable comprenant au moins un composé photoinitiateur. On notera que l'on pourra toutefois également envisager d'utiliser des réactants pouvant polymériser sous l'action d'un autre facteur que la lumière.

Avantageusement, le procédé selon l'invention comprend aussi une étape supplémentaire consistant à former sur ledit élément filaire revêtu de ladite couche fine au moins une couche de revêtement protecteur classique ou quasi-classique d'un épaisseur inférieure à 60 µm, préférentiellement inférieure à 40 µm. Les fibres revêtues selon le procédé préconisé par l'invention présenteront donc alors un diamètre inférieur aux diamètres obtenus selon les techniques de l'état de l'art et permettront d'augmenter la compacité des câbles correspondants.

L'invention concerne également l'utilisation d'un dispositif pour le procédé décrit ci-dessus, ce dispositif étant caractérisé en ce qu'il comprend des moyens de pulvérisation d'au moins un agent liquide sur un élément filaire.

Selon le mode de réalisation préféré d'un tel dispositif, les moyens de pulvérisation sont intégrés dans une chambre de pulvérisation délimitant une enceinte de pulvérisation pourvue d'un orifice d'entrée et d'un orifice de sortie et à l'intérieur de laquelle défile essentiellement verticalement ledit élément filaire. Une telle enceinte permet de délimiter un volume défini de pulvérisation et d'éviter les projections d'agent liquide lors de l'opération. Avantageusement, ledit orifice d'entrée de la chambre de pulvérisation peut présenter une forme conique facilitant l'introduction de l'élément filaire de la chambre.

Avantageusement, les moyens de pulvérisation incluent au moins deux buses de pulvérisation permettant de distribuer ledit agent liquide selon un cône de pulvérisation. Selon un mode de réalisation préféré, on utilise trois buses de pulvérisation équiréparties autour dudit élément filaire et ces buses présentent un orifice de sortie d'un diamètre compris entre quelques dizaines à quelques centaines de microns. De tels moyens permettent une distribution conique du jet, les cône formés étant inclinés d'un angle (pouvant être symbolisé par l'angle formé par les axes longitudinaux des buses et la fibre défilant) préférentiellement compris entre 20° et 90 °.

Selon une variante particulièrement intéressante de l'invention, ladite chambre de pulvérisation est pourvue d'une gouttière de récupération de l'agent liquide pulvérisé en excès, lesdits moyens de pulvérisation incluent au moins un réservoir dudit agent liquide et le dispositif comprend des moyens de réacheminement de l'agent liquide récupéré dans ladite gouttière vers ledit réservoir. Il est ainsi possible de travailler en circuit fermé pour éviter toute perte de l'agent liquide pulvérisé.

La présente invention porte également sur toute fibre optique caractérisée en ce qu'elle est constituée de silice revêtue d'au moins une fine couche réalisée à partir d'un réactant liquide et obtenue par le procédé décrit ci-dessus.

Selon une variante, ladite fine couche est déposée directement sur la silice.

Selon une autre variante, ladite fine couche forme :
- une couche intermédiaire entre deux couches de revêtement classique ou quasi-classique, ou
- une couche de protection extérieure prévue sur une couche de revêtement classique ou quasi-classique.

Préférentiellement, ladite fine couche présente une épaisseur comprise entre quelques centaines de nanomètres et quelques micromètres.

L'invention, ainsi que les avantages qu'elle présente seront plus facilement compris grâce à la description qui va suivre d'exemples non limitatifs de réalisation en référence aux dessins, dans lesquels :
- la figure 1 représente une vue de face d'un dispositif de pulvérisation d'un agent liquide sur un élément filaire selon l'invention ne montrant, pour les besoins de clarté de la description, qu'un seul pistolet de pulvérisation ;
- la figure 2 représente une vue de face en coupe partielle du dispositif montré à la figure 1 ;
- la figure 3 représente une vue de dessus du dispositif de pulvérisation sur laquelle les trois pistolets de pulvérisation sont montrés ;
- la figure 4 représente une vue schématique d'une tour de fibrage pour fibres optiques intégrant un dispositif de pulvérisation tel que représenté aux figures 1 à 3.

### Dispositif de pulvérisation

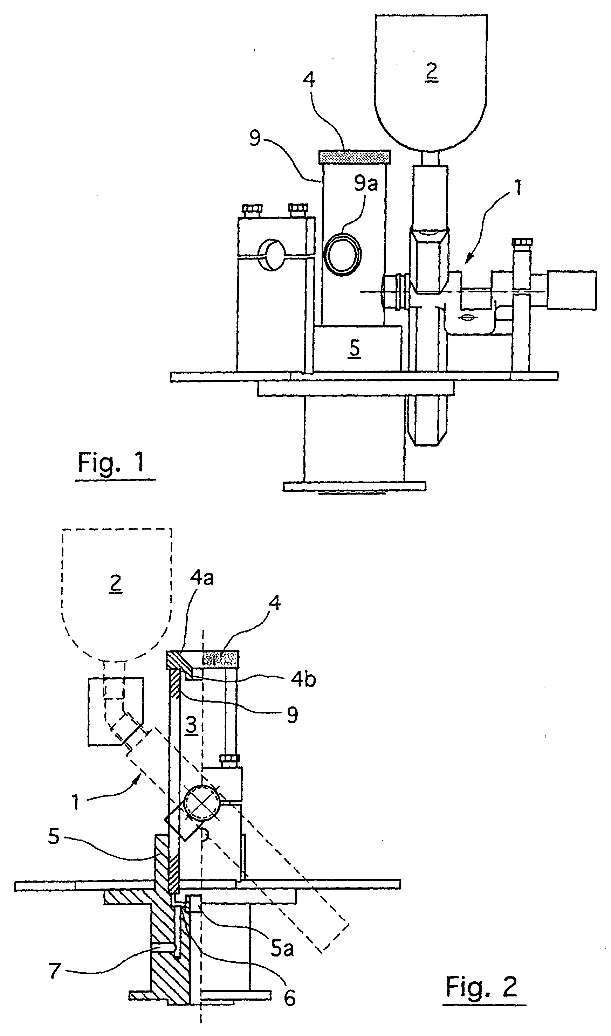

En référence aux figures 1 à 3, le dispositif de pulvérisation pour élément filaire utilisé selon l'invention présente trois pistolets de pulvérisation 1 possédant chacun un réservoir 2 d'agent liquide (sur les figures 1 et 2, un seul pistolet 1 et son réservoir 2 sont représentés). On notera que dans d'autres modes de réalisation, on pourra également utiliser un réservoir commun à tous les pistolets.

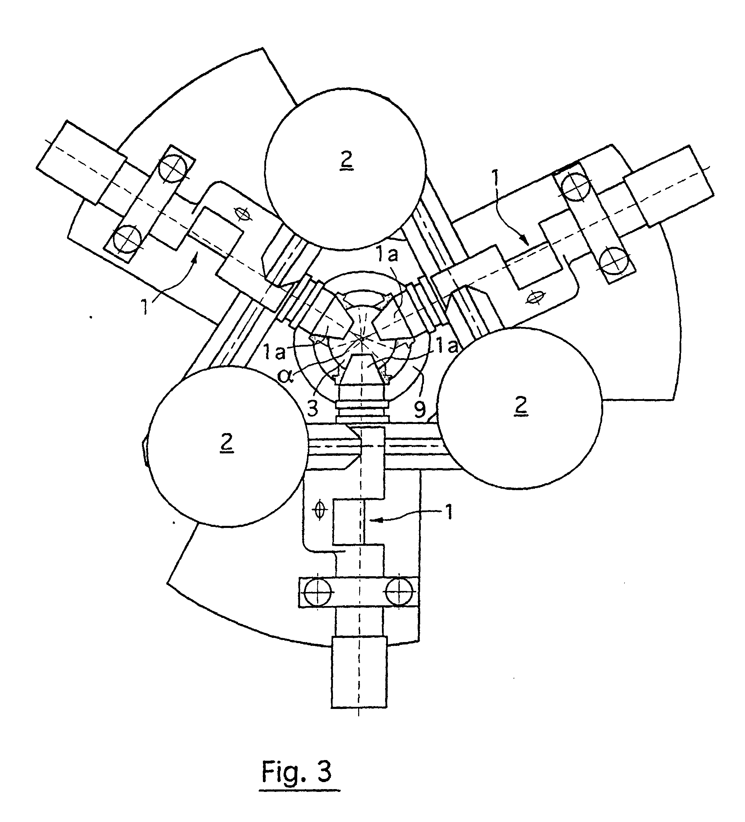

En référence plus précisément à la figure 3, ces pistolets sont pourvus à leur extrémité d'une buse de pulvérisation la. Selon les applications, les buses auront préférentiellement un diamètre de quelques dizaines à quelques centaines de microns.

Les buses la sont positionnées dans des plans décalés. Le produit est pulvérisé sous forme de très fines gouttelettes dont l'avantage est un meilleur étalement sur la fibre. Le jet projeté est conique ce qui permet de pallier aux éventuels déplacements de la fibre pouvant survenir lors du fibrage. Dans le mode de réalisation représenté, le jet conique forme un angle α de quelques degrés.

Les buses la sont insérées dans une chambre de pulvérisation 3 délimitée par une enceinte 9, un bouchon 4 positionné au-dessus de ladite enceinte 9 et un bouchon 5 positionné au-dessous de ladite enceinte 9.

L'enceinte 9 présente des orifices 9a de positionnement des buses la étanchéifiés par des joints 1b.

En référence à la figure 2, le bouchon 4 est percée d'un canal 4b permettant le passage de l'élément filaire et pourvu à son extrémité supérieure par un orifice d'entrée conique 4a de celui-ci. Selon les modes de réalisation, le diamètre de cet orifice d'entrée peut varier de quelques centaines de microns à quelques millimètres.

Le bouchon 5 est pourvu d'un orifice de sortie 5a et d'une gouttière 6 permettant de récupérer le surplus de produit projeté contre les parois de l'enceinte 9 par les pistolets 1. La gouttière est reliée à un circuit d'évacuation 7 relié à un système de renvoi (non représenté) du produit vers les réservoirs 2.

La chambre de pulvérisation 3 permet donc :
- de protéger l'environnement de l'agent liquide pulvérisé autour de l'élément filaire ;
- de récupérer l'excédent de produit projeté autour de l'élément filaire, grâce à la gouttière 6.

Selon les modes de réalisation du dispositif, les distances buses-élément filaire, l'angle α, la pression d'alimentation en agent liquide pulvérisé sont optimisés en fonction du nombre et du type de pistolets ou buses utilisés et selon l'épaisseur de revêtement souhaitée ; ces premiers paramètres étant fixés, il est nécessaire de définir:
- la pression minimum d'agent liquide pour laquelle le jet conique est uniforme et correctement formé ;
- la pression maximum d'agent liquide pour laquelle la fibre se met à vibrer sous l'effet de l'air sortant des buses.

La pression est ensuite modifiée en fonction de la vitesse de fibrage.

On notera par ailleurs que tous les éléments du dispositif sont réalisés dans des matériaux résistants aux résines et opaques aux UV.

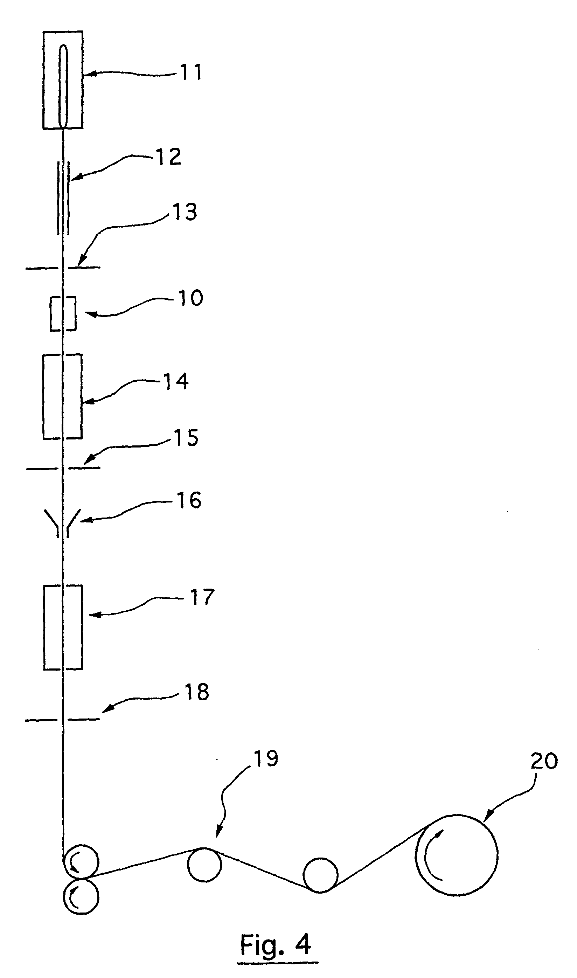

Le dispositif représenté aux figures 1 à 3 peut facilement être intégré à une tour de fibrage de fibres optiques, comme représenté sur la figure 4, pour la pulvérisation d'un réactant liquide photopolymérisable sous forme d'une fine couche d'épaisseur comprise entre quelques centaines de nanomètres et quelques micromètres.

En référence à la figure 4, un telle filière comprend de façon classique de bas en haut :
- un four 11 dans lequel la préforme est ramollie ;
- un système de refroidissement 12 de la fibre de silice sortant du four 11 ;
- un premier dispositif mesureur de diamètre 13 permettant de mesurer le diamètre de la fibre avant revêtement ;
- un premier dispositif de dépôt d'une première couche de revêtement sur la fibre ;
- un four UV 14 permettant de polymériser et ainsi de durcir la couche de revêtement déposée sur la fibre grâce au premier dispositif de dépôt ;
- un second dispositif mesureur de diamètre 15 permettant de mesurer le diamètre de la fibre revêtue de la première couche de revêtement ;
- une filière pressurisée 16 de dépôt d'une seconde couche de revêtement sur la fibre ;
- un second four UV 17 permettant de polymériser et ainsi de durcir la deuxième couche de revêtement déposée sur la fibre grâce à la filière pressurisée 16;
- un troisième dispositif mesureur de diamètre 18 permettant de mesurer le diamètre de la fibre revêtue de la première couche de revêtement et de la seconde couche de revêtement ;
- un assemblage 19 permettant de réceptionner la fibre défilant par gravité dans les éléments cités ci-dessus et incluant une bobine 20.

Conformément à la présente invention, le premier dispositif de dépôt est constitué par un dispositif de pulvérisation 10 tel que décrit en référence aux figures 1 et 2 et permet le dépôt d'un réactant liquide sur la fibre sous la forme d'une couche mince présentant une épaisseur pouvant varier de quelques centaines de nanomètres à quelques micromètres. On notera que, dans d'autres modes de réalisation, on pourra aussi intégrer plusieurs systèmes de pulvérisation successifs.

La filière pressurisée 16 permet quant à elle de former sur la fibre un revêtement supplémentaire d'une épaisseur inférieure à 60 µm, préférentiellement inférieure à 40 µm On notera à ce sujet qu'on pourra utiliser sur la tour de fibrage une deuxième filière pressurisée pour le dépôt d'une troisième couche de revêtement. On notera également que l'on pourra également pulvériser, déposer le revêtement protecteur et polymériser les deux couches simultanément.

### Résines

Le dispositif de pulvérisation décrit en référence aux figures 1 et 2 a été utilisé pour pulvériser sur des fibres optiques en silice une fine couche de divers réactants liquides photopolymérisables. Le composition de ces réactants liquides est donnée dans les exemples 1 et 2 ci-après.

### Exemple 1

On a réalisé un mélange mécanique du composé de formule A mentionnée ci-dessus, dans une solution constituée à peu près à parts égales d'isobornylacrylate et de phénoxyéthylétheracrylate.

La quantité de composé A incorporée dans ce mélanges a été de 20 % en poids.

Le liquide obtenu a présenté une viscosité de l'ordre de 10 mPa.s, et s'est montré homogène et stable dans le temps (pas de démixion après plusieurs mois).

Un photoinitiateur classique pour la polymérisation UV a été ajouté à ce liquide, dans des proportions pondérales classiques.

### Exemple 2

Le composé de formule E mentionné ci-dessus a été mélangé à la solution phénoxyéthylétheracrylate / isobornylacrylate mentionnée à l'exemple 1 selon la même proportion que dans cet exemple. La résine obtenue s'est montrée également liquide, homogène et stable avec une viscosité de l'ordre de 10 mPa.s. On lui a rajouté un composé photoinitiateur pour la polymérisation UV.

Afin d'évaluer les caractéristiques techniques des revêtements ainsi obtenus, les réactants liquides ont également été pulvérisés sur plaques de silice et les résultats obtenus ont été comparés aux résultats obtenus par dépôt sur plaque de silice des résines de revêtement classique (950-106 et 950-108 de DSM) et de la solution essentiellement composée du mélange phénoxyéthylétheracrylate /isobornylacrylate / photoinitiateur.

Dans ce cadre, les propriétés d'adhésion à la silice et les propriétés de réactivité aux UV des résines précédentes d'une part et des résines selon les exemples 1 et 2 ont été évaluées.

Le test d'adhésion a été réalisé selon la norme NFT- 30.038 relative aux films de faible épaisseur selon laquelle :
- on dépose une fine couche de résine (env. 10 µm) sur une plaque de silice au moyen d'un rouleau calibré ;
- on effectue un quadrillage sur la résine polymérisée avec un peigne normalisé; et,
- on évalue l'adhésion selon les décollements observés après passage d'un ruban adhésif normalisé sur la partie quadrillée.

Ce test d'adhésion, réalisé après vieillissements de 48 h à 60° C et 95% d'humidité relative, 48 h dans l'eau à 60°C, suivis de 2 h de repos à 23°C et 50% d'humidité relative, a montré que, contrairement aux résines de référence, les nouvelles résines ne se sont pas décollées des plaques de silice. Ces nouvelles résines ont donc une adhésion sur silice améliorée et préservée après vieillissements à l'eau et l'humidité.

La réactivité aux UV a quant à elle été étudiée au moyen d'un photocalorimètre (DPA Perkin Elmer) qui fournit un pic exothermique lors de la polymérisation de la résine et permet la mesure des temps de début et de fin de réaction à partir du pic obtenu.

Les résultats obtenus ont montré que la réactivité des nouvelles résines aux UV était équivalente à celle des résines de référence. L'épaisseur déposée des résines selon l'invention sur fibres optiques étant beaucoup plus faible que celle des revêtements classiques (plus de 50 fois moindre), ceci apporte le gros avantage de pouvoir utiliser des puissances UV beaucoup plus faibles dans le cadre de l'invention. Les nouvelles résines ici proposées sont donc bien adaptées aux conditions de fibrage actuelles. Elles nécessitent, de plus, des puissances UV plus faibles que les résines classiques, ce qui permet :
- soit d'augmenter les vitesses de fibrage sans rajouter de fours UV;
- soit de réduire, pour une vitesse donnée, le nombre de fours nécessaires, ce qui apporte un gain sur le coût de fabrication.

### Fibres optiques

Le dispositif de pulvérisation décrit ci-dessus en référence aux figures 1 et 2 a été utilisé pour pulvériser les résines données aux exemples 1 et 2 sur une fibre de silice en défilement.

Il a été intégré sur la tour de fibrage à la place des filières classiques comme montré à la figure 3. Son encombrement est peu différent de celui fourni par les filières et le porte-filières.

Le revêtement formé étant très fin, il a été protégé mécaniquement par une résine de revêtement de facture quasi-classique.

A ce sujet, on notera que, dans l'art antérieur, il était connu d'utiliser deux couches protectrices, à savoir une couche primaire souple, permettant d'amortir les contraintes et les chocs (module d'Young 2 à 500 MPa, température de transition vitreuse : -20 °C), et une couche secondaire plus dure résistant à l'abrasion (module d'Young de 20 à 2000 MPa, Température de transition vitreuse vers 60 °C).

Dans le cadre du présent exemple de réalisation de l'invention, il a été choisi d'utiliser non pas deux couches protectrices mais une seule présentant des caractéristiques intermédiaires. Un tel revêtement "intermédiaire" a été mis en oeuvre sur les fibres avec une épaisseur maximale de 30 à 60 µm, la vitesse de fibrage étant fixée à 100 m/min. Il présente les caractéristiques visco-élastiques suivantes :
- température de transition vitreuse : 40 °C
- module d'Young : de 10 à 1000 MPa
- viscosité : 5000 mPa.s à 25 °C.

La pulvérisation des résines liquides a été réalisée en utilisant les paramètres suivants :
- diamètre des buses : quelques centaines de microns ;
- débit de produit pulvérisé : de l'ordre du cm3/min ;
- distance centre des buses-fibres : quelques millimètres.

De tels paramètres ont permis d'obtenir un dépôt homogène d'épaisseur proche du micron. Cet épaisseur a été mesurée par microscopie électronique et AFM sur des des échantillons de film ne possédant pas de revêtement protecteur.

Quatre fibres on été testées en Weibull et facteur "n".

Par rapport aux fibres classiques, elle présentent :
- une force à la rupture équivalente ;
- un facteur "n" initial sensiblement supérieur et non dégradé après un vieillissement accéléré de 30 jours à 85 °C et 85 % d'humidité relative (mesures réalisées après repos de 24 h à 23 °C et 50 % d'humidité relative).

Il a été également vérifié que les fibres sont facilement dénudables et raccordables avec des atténuations inférieures à 0,1 dB.

## Revendications

1. Procédé de dépôt d'au moins une couche mince d'un agent liquide sur un élément filaire destinée à former un revêtement sur ledit élément filaire **caractérisé en ce qu'**il consiste à pulvériser ledit agent liquide sur ledit élément filaire grâce à des moyens de pulvérisation, ledit élément filaire et lesdits moyens de pulvérisation étant en déplacement relatif l'un par rapport à l'autre, et **en ce que** ledit agent liquide est un réactant liquide polymérisable comprenant :
- au moins un composé acrylophosphoré ou méthacrylophosphoré de formule (I) ou de formule (II): 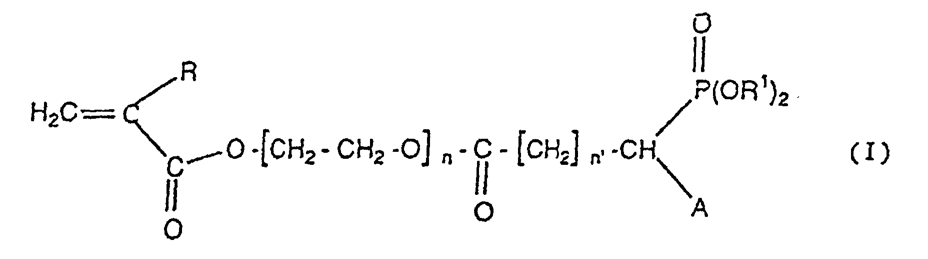 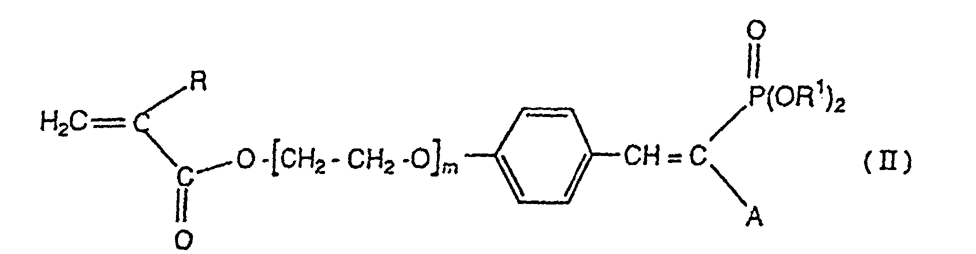 dans lesquelles,
R représente un atome d'hydrogène ou un reste alkyle, linéaire ou ramifié, ayant un nombre d'atomes de carbone allant de 1 à 3, et de préférence soit un atome d'hydrogène soit un radical méthyle ;
R¹ représente un reste alkyle, linéaire ou ramifié ayant un nombre d'atomes de carbone allant de 1 à 4 et de préférence un radical CH₃- ou un radical CH₃CH₂- ;
A représente un atome d'hydrogène ou un reste alkyle, linéaire ou ramifié ayant un nombre d'atomes de carbone allant de 1 à 3 ou un autre groupement phosphonate - P(O)(OR¹)₂ et représente de préférence -P(O)(OCH₃)₃ ou -P(O)(OEt)₂;
n et n' sont des nombres qui peuvent prendre des valeurs identiques ou différentes égales à 1, 2 ou 3 ;
m peut être égal à 0, 1, 2 ou 3.
- au moins un diluant acrylate.

2. Procédé selon la revendication I **caractérisé en ce que** ledit agent liquide présente une viscosité inférieure à 100 mPa.s.

3. Procédé selon la revendication 1 ou 2 **caractérisé en ce que** la pulvérisation dudit agent liquide sur ledit élément filaire est effectuée sous forme d'un jet essentiellement conique.

4. Procédé selon la revendication 3 **caractérisé en ce que** ledit jet essentiellement conique forme un angle α compris entre 1° et 10 °.

5. Procédé selon l'une quelconque des revendications 1 à 4 **caractérisé en ce que** ladite pulvérisation dudit agent liquide est effectuée à une distance comprise entre 1 mm et 20 mm dudit élément filaire.

6. Procédé selon l'une quelconque des revendications 1 à 5 **caractérisé en ce que** ladite étape de pulvérisation est effectuée en utilisant une pression dudit agent liquide comprise entre 0,1 et 2 bars.

7. Procédé selon l'une quelconque des revendications 4 à 6 **caractérisé en ce qu'**il comprend une étape consistant à déterminer une pression minimum de pulvérisation dudit agent liquide pour laquelle ledit jet conique de pulvérisation est correctement formé, une étape consistant à déterminer une pression maximum de pulvérisation dudit agent liquide pour laquelle ledit élément filaire se met à vibrer sous l'effet de la pulvérisation et une étape consistant à fixer une pression optimale de pulvérisation comprise entre ladite pression minimum et ladite pression maximum choisie en fonction de la vitesse de défilement dudit élément filaire.

8. Procédé selon l'une quelconque des revendications 1 à 7 **caractérisé en ce que** ledit composé est choisi dans le groupe constitué par les composés de formule :

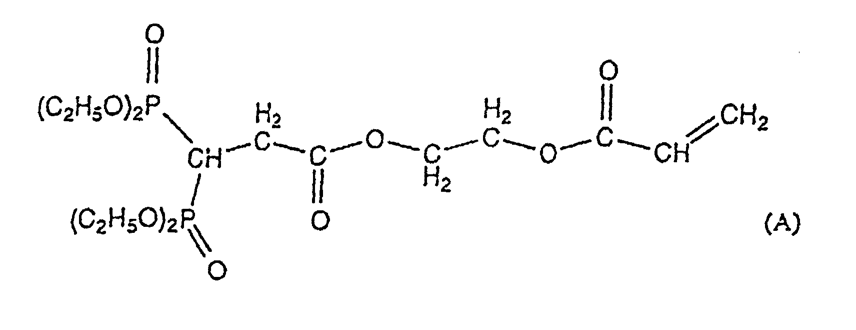

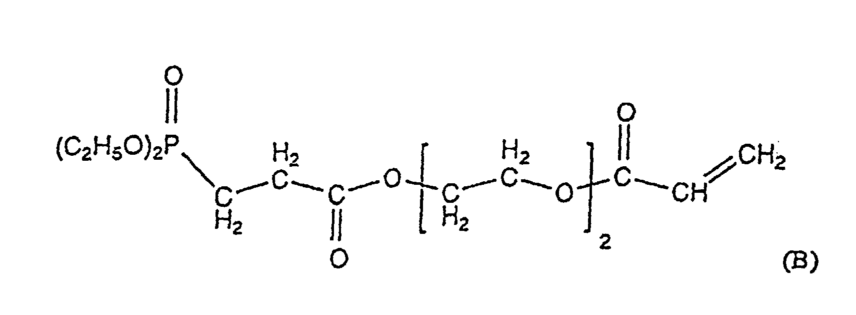

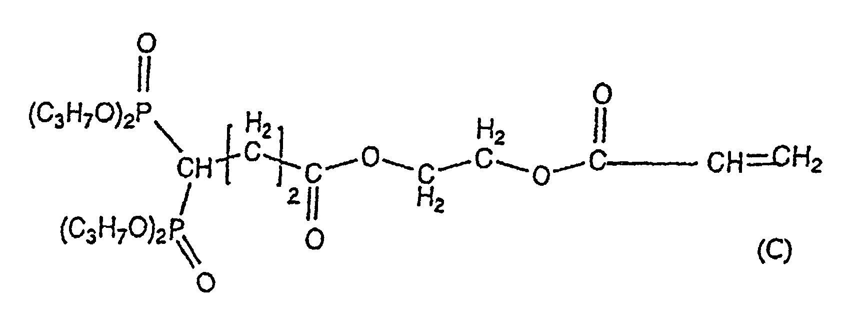

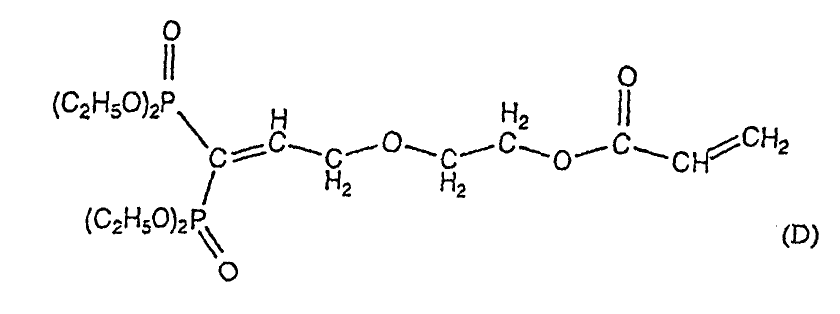

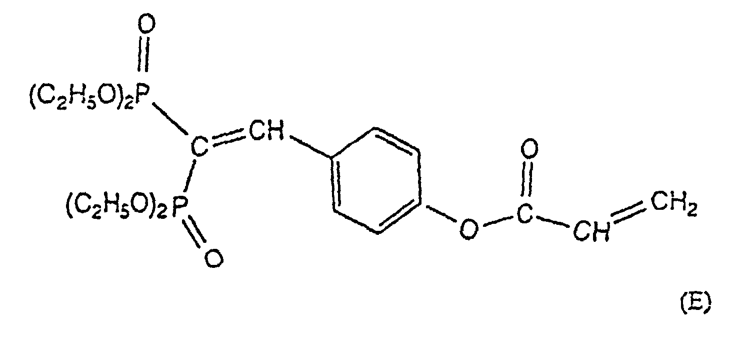

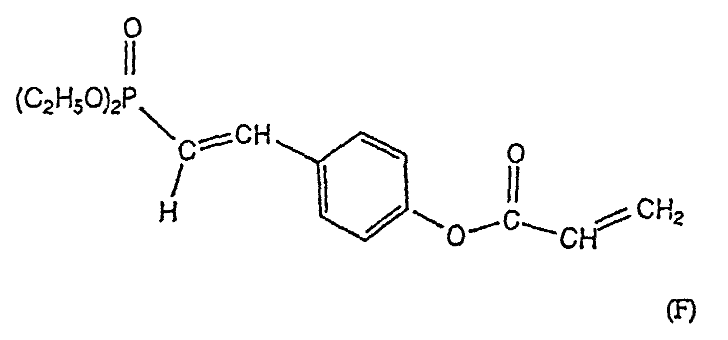

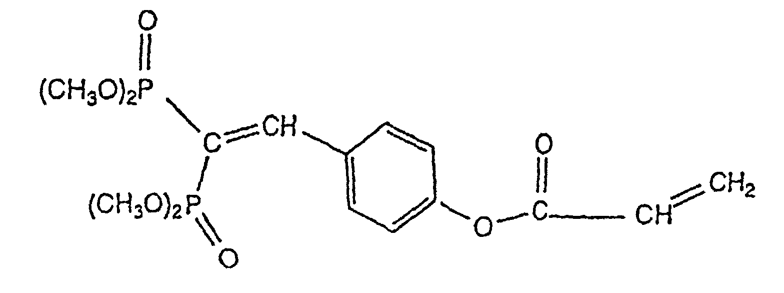

9. Procédé selon l'une des revendications 1 à 8 **caractérisé en ce que** ledit réactant liquide est pulvérisé sur ledit élément filaire pour former une couche d'épaisseur comprise entre quelques centaines de nanomètres et quelques micromètres.

10. Procédé selon l'une quelconque des revendications 1 à 9 **caractérisé en ce que** ledit diluant acrylate est choisi dans le groupe constitué par la phénoxyéthylétheracrylate, l'éthoxyéthylacrylate, l'éthoxyéthoxyéthylacrylate, la triméthylolpropanetriacrylate, l'isobornylacrylate.

11. Procédé selon l'une des revendications 1 à 10 **caractérisé en ce que** ledit réactant liquide photopolymérisable comprend de plus au moins un composé photoinitiateur.

12. Procédé selon l'une des revendications 1 à 11 **caractérisé en ce qu'**il comprend une étape supplémentaire consistant à former sur ledit élément filaire au moins une couche de revêtement secondaire classique ou quasi-classique d'une épaisseur inférieure à 60 µm, préférentiellement inférieure à 40 µm.

13. Procédé selon l'une des revendications 1 à 12 **caractérisé en ce que** ledit élément filaire défile verticalement.

14. Utilisation d'un dispositif comprenant des moyens de pulvérisation (1, 2) d'au moins un agent liquide sur un élément filaire ledit agent liquide comprenant au moins un composé acylosphophoré ou métacrylophosphoré, lesdits moyens de pulvérisation (1) comprenant au moins trois buses de pulvérisation équiréparties autour dudit élément filaire et permettant de distribuer ledit agent liquide selon un cône de pulvérisation, pour la mise en oeuvre du procédé selon l'une des revendications 1 à 13

15. Utilisation selon la revendication 14 **caractérisée en ce que** lesdits moyens de pulvérisation (1, 2) sont intégrés dans une chambre de pulvérisation (3) pourvue d'un orifice d'entrée (4a) et d'un orifice de sortie (5a) et à l'intérieur de laquelle défile verticalement ledit élément filaire.

16. Utilisation selon l'une des revendications 14 ou 15 **caractérisée en ce que** lesdits buses (1a) présentent un orifice de sortie d'un diamètre compris entre quelques dizaines à quelques centaines de microns.

17. Utilisation selon l'une quelconque des revendications 15 à 16 **caractérisée en ce que** ladite chambre de pulvérisation (3) est pourvue d'une gouttière (6) de récupération de l'agent liquide pulvérisé en excès.

18. Utilisation selon la revendication 17 **caractérisée en ce que** lesdits moyens de pulvérisation (1) incluent au moins un réservoir (2) dudit agent liquide et **en ce qu'**il comprend des moyens de réacheminement de l'agent liquide récupéré dans ladite gouttière (6) vers ledit réservoir (2).

19. Utilisation d'une tour de fibrage pour fibres optiques comprenant au moins un dispositif (10) de dépôt d'un agent liquide par pulvérisation pour la mise en oeuvre d'un procédé selon l'une des revendications 11 à 13.

20. Fibre optique **caractérisée en ce qu'**elle est constituée d'un coeur de silice revêtue d'au moins une fine couche réalisée à partir d'un réactant liquide d'une épaisseur comprise entre quelques centaines de nanomètres et quelques micromètres obtenue par le procédé selon l'une des revendications 1 à 13.

21. Fibre optique selon la revendication 20 **caractérisée en ce que** ladite fine couche est déposée directement sur la silice.

22. Fibre optique selon l'une des revendications 20 ou 21 **caractérisée en ce qu'**elle comprend en outre au moins une couche de revêtement classique ou quasi-classique et **en ce que** ladite fine couche forme :
- une couche intermédiaire entre deux couches de revêtement classique, ou
- une couche de protection extérieure prévue sur une couche de revêtement classique ou quasi-classique.

23. Fibre optique selon l'une des revendications 20 à 22 **caractérisée en ce que** ladite fine couche présente une épaisseur comprise entre quelques centaines de nanomètres et quelques micromètres.

## Patentansprüche

1. Verfahren zum Auftragen mindestens einer dünnen Schicht einer flüssigen Substanz auf ein fadenförmiges Element, um eine Beschichtung dieses fadenförmigen Elements zu bilden, **dadurch gekennzeichnet, dass** die flüssige Substanz auf das fadenförmige Element mit Hilfe von Zerstäubungsmitteln zerstäubt wird, wobei das fadenförmige Element und das Zerstäubungsmittel gegeneinander bewegt werden und dass es sich bei der flüssigen Substanz um einen polymerisierbaren flüssigen Reaktanden handelt, der Folgendes umfasst:
- mindestens eine Acrylphosphor- oder Methacrylphosphor-Zusammensetzung nach der Formel (I) oder (II): 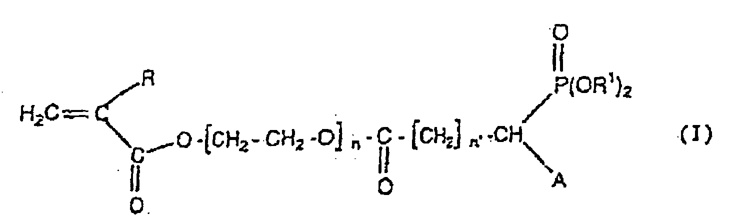 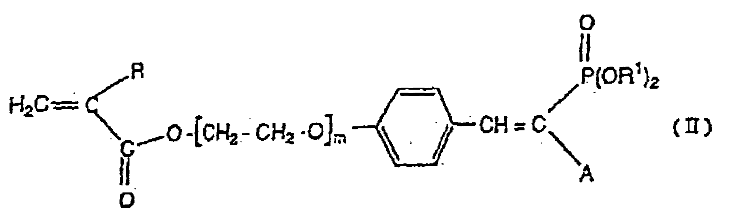 wobei:
R ein Wasserstoffatom oder einen linearen oder verzweigten Alkylrest darstellt, der eine Zahl von Kohlenstoffatomen zwischen 1 und 3 umfasst, und vorzugsweise entweder ein Wasserstoffatom oder ein Methylradikal umfasst;
R¹ einen linearen oder verzweigten Alkylrest darstellt, welcher eine Zahl von Kohlenstoffatomen zwischen 1 und 4 und vorzugsweise entweder ein CH₃-Radikal oder ein CH₃-CH₂-Radikal umfasst;
A ein Wasserstoffatom oder einen linearen oder verzweigten Alkylrest darstellt, welcher eine Zahl von Kohlenstoffatomen zwischen 1 und 3 umfasst, oder eine andere Phosphonatgruppe - P(O)(OR¹)₂ umfasst und bevorzugterweise -P(O)(OCH₃)₃ oder
-P(O)(OEt)₂ darstellt;
n und n' Zahlen sind, die identische oder verschiedene Werte von 1, 2 oder 3 annehmen können;
m gleich 0, 1, 2 oder 3 sein kann;
- mindestens ein Acrylatlösungsmittel.

2. Verfahren nach Anspruch 1., **dadurch gekennzeichnet, dass** die flüssige Substanz eine Viskosität von weniger als 100 mPa·s aufweist.

3. Verfahren nach einem der Ansprüche 1 oder 2, **dadurch gekennzeichnet, dass** das Zerstäuben der flüssigen Substanz auf das fadenförmige Element in Form eines im wesentlich kegelförmigen Strahls erfolgt.

4. Verfahren nach Anspruch 3, **dadurch gekennzeichnet, dass** der im wesentlichen kegelförmige Strahl einen Winkel α zwischen 1° und 10° bildet.

5. Verfahren nach einem der Ansprüche 1 bis 4, **dadurch gekennzeichnet, dass** das Zerstäuben der flüssigen Substanz aus einer Entfernung vom fadenförmigen Element erfolgt, die zwischen 1 mm und 20 mm beträgt.

6. Verfahren nach einem der Ansprüche 1 bis 5, **dadurch gekennzeichnet, dass** der Zerstäubungsschritt bei einem Druck der flüssigen Substanz zwischen 0,1 und 2 bar erfolgt.

7. Verfahren nach einem der Ansprüche 4 bis 6, **dadurch gekennzeichnet, dass** es einen Schritt umfasst, bei dem der minimale Zerstäubungsdruck der flüssigen Substanz festgestellt wird, der eine korrekte Form des kegelförmigen Zerstäubungsstrahls gewährleistet, einen Schritt, bei dem der maximale Zerstäubungsdruck der flüssigen Substanz- festgestellt wird, bei dem das fadenförmige Element unter dem Effekt der Zerstäubung zu schwingen beginnt und einen Schritt, bei dem der optimale Zerstäubungsdruck zwischen dem gewählten minimalen und dem gewählten maximalen Zerstäubungsdruck als Funktion der Ablaufgeschwindigkeit des fadenförmigen Elementes festgestellt wird.

8. Verfahren nach einem der Ansprüche 1 bis 7, **dadurch gekennzeichnet, dass** die Zusammensetzung aus der Gruppe gewählt wird, welche aus der Zusammensetzung gebildet ist.

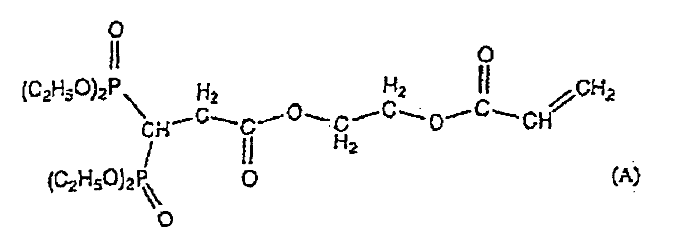

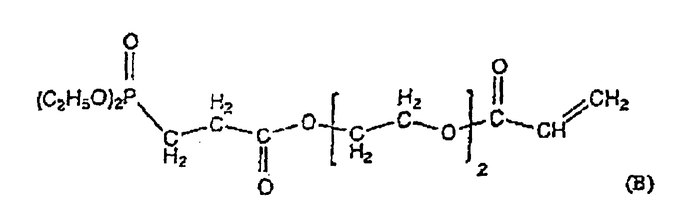

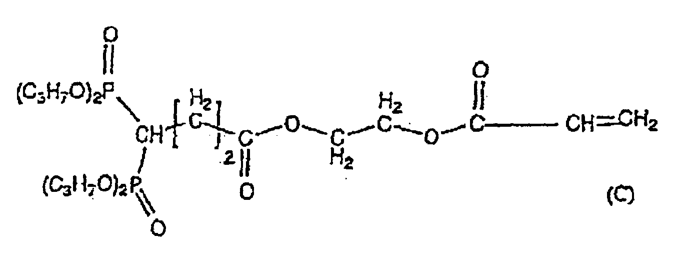

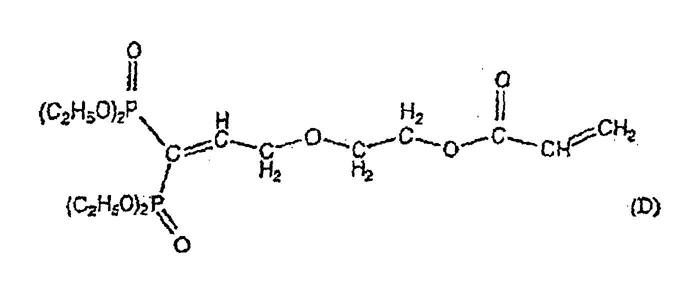

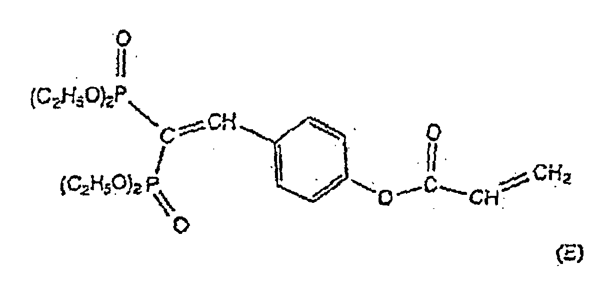

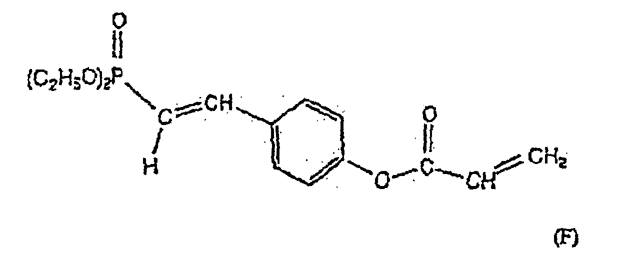

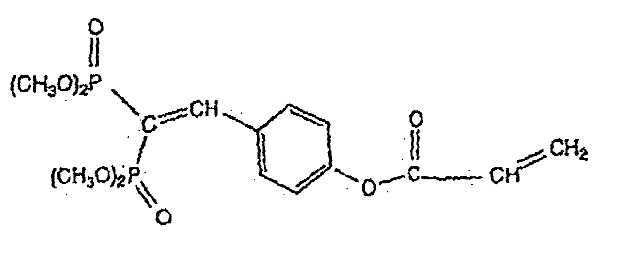

9. Verfahren nach einem der Ansprüche 1 bis 8, **dadurch gekennzeichnet, dass** die flüssige Substanz auf das fadenförmige Element zerstäubt wird, um eine Schicht mit einer Schichtdicke zwischen einigen hundert Nanometern und einigen Mikrometern zu bilden.

10. Verfahren nach einem der Ansprüche 1 bis 9, **dadurch gekennzeichnet, dass** das Acrylatlösungsmittel aus der Gruppe gewählt wird, die aus Phenoxyethyletheracrylat, Ethoxyethylacrylat, Ethoxyethoxyethylacrlyat, Trimethylolpropanetriacrylat bzw. Isobomylacrylat gebildet ist.

11. Verfahren nach einem der Ansprüche 1 bis 10, **dadurch gekennzeichnet, dass** der photopolymerisierbare flüssige Reaktand ferner mindestens eine Photoinitiator-Zusammensetzung umfasst.

12. Verfahren nach einem der Ansprüche 1 bis 11, **dadurch gekennzeichnet, dass** es einen zusätzlichen Schritt umfasst, bei dem mindestens eine klassische oder nahezu klassische Sekundärbeschichtung mit einer Schichtdicke von weniger als 60 µm, vorzugsweise weniger als 40 µm, auf dem fadenförmigen Element gebildet wird.

13. Verfahren nach einem der Ansprüche 1 bis 12, **dadurch gekennzeichnet, dass** das fadenförmige Element in vertikaler Richtung vorbeizieht.

14. Verwendung einer Vorrichtung ,die Mittel (1, 2) zum Zerstäuben von mindestens einer flüssigen Substanz auf ein fadenförmiges Element umfasst, wobei die flüssige Substanz mindestens eine acyl-phosphorierte oder metacrylphosphorierte Zusammensetzung umfasst, wobei die Zerstäubungsmittel (1) mindestens drei Zerstäuberdüsen umfassen, die gleichmäßig um das fadenförmige Element verteilt sind und das Verteilen der flüssigen Substanz innerhalb eines Zerstäubungskegels ermöglichen, um den Einsatz des Verfahrens nach einem der Ansprüche 1 bis 13 zu gewährleisten.

15. Verwendung nach Anspruch 14, **dadurch gekennzeichnet, dass** die Zerstäubungsmittel (1, 2) in einer Zerstäuberkammer (3) eingebaut sind, die eine Eingangsöffnung (4a) und eine Ausgangsöffnung (5a) aufweist, innerhalb derer das fadenförmige Element senkrecht vorbeizieht.

16. Verwendung nach einem der Ansprüche 14 oder 15, **dadurch gekennzeichnet**, dassdie Düsen (1a) eine Ausgangsöffnung aufweisen, deren Durchmesser zwischen einigen zehn und einigen Hundert Mikrometern liegt.

17. Verwendung nach einem der Ansprüche 15 oder 16, **dadurch gekennzeichnet, dass** die Zerstäuberkammer (3) über eine Ablaufrinne (6) zum Wiedergewinnen des Überschusses an zerstäubter flüssiger Substanz verfügt.

18. Verwendung nach Anspruch 17, **dadurch gekennzeichnet, dass** die Zerstäubungsmittel (1) mindestens einen Behälter (2) für die flüssige Substanz umfassen und, dass sie über Mittel zum Zurückleiten der in der Ablaufrinne (6) wiedergewonnenen flüssigen Substanz in den Behälter (2) verfügen.

19. Verwendung einer Faserungsvorrichtung für optische Fasern, die mindestens eine Vorrichtung (10) zum Aufbringen einer flüssigen Substanz durch Zerstäuben umfasst, um ein Verfahren nach einem der Ansprüche 11 bis 13 anzuwenden.

20. Optische Faser, **dadurch gekennzeichnet, dass** sie aus einem Siliziumkern gebildet wird, der mindestens eine aus einer flüssigen Substanz aufgebaute dünne Schicht aufweist, deren Schichtdicke zwischen einigen, hundert Nanometern und einigen Mikrometern liegt, wobei die Schicht mit Hilfe eines Verfahrens nach einem der Ansprüche 1 bis 13 hergestellt wurde.

21. Optische Faser nach Anspruch 20, **dadurch gekennzeichnet, dass** die erwähnte dünne Schicht direkt auf das Silizium aufgebracht wird.

22. Optische Faser nach einem der Ansprüche 20 oder 21, **dadurch gekennzeichnet, dass** sie ferner mindestens eine klassische oder nahezu klassische Beschichtung aufweist und, dass diese dünne Beschichtung folgendes bildet:
- eine Zwischenschicht zwischen zwei klassischen Beschichtungen oder
- eine äußere Schutzschicht, die auf einer klassischen oder nahezu klassischen Beschichtung vorgesehen ist.

23. Optische Faser nach einem der Ansprüche 20 bis 22, **dadurch gekennzeichnet, dass** die Stärke der dünnen Schicht zwischen einigen hundert Nanometem und einigen Mikrometern beträgt.

## Claims

1. A process for depositing at least one thin film of a liquid agent onto an elongate article, said film being intended to form a coating on said elongate article, **characterised in that** said process comprises spraying said liquid agent on said elongate article with spraying means, said elongate article and said spraying means being in motion relative to one another, and **in that** said liquid agent is a polymerisable liquid reactant comprising:
- at least one acrylophosphorus or methylacrylophosphorus compound of the formula (I) or a formula (II): 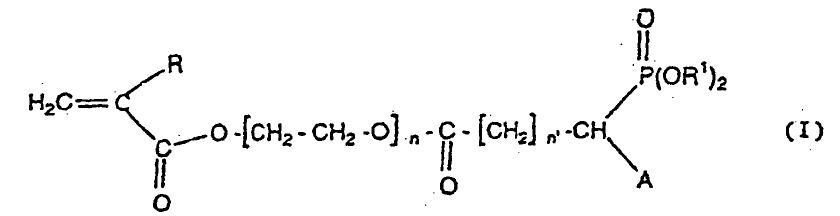 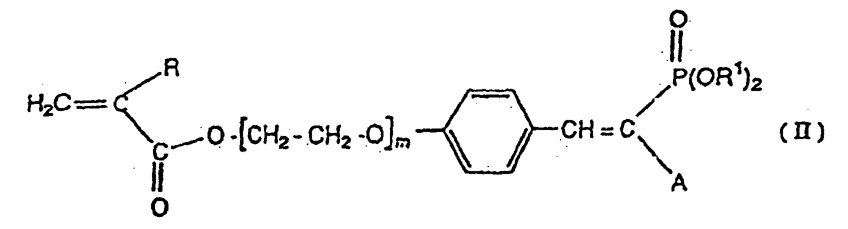 in which,
R represents a hydrogen atom or a linear or branched alkyl residue, with a number of carbon atoms ranging from 1 to 3, and preferably either a hydrogen atom or a methyl radical;
R¹ represents a linear or branched alkyl residue, with a number of carbon atoms ranging from 1 to 4, and preferably a CH₃ radical or a CH₃CH₂ radical;
A represents a hydrogen atom or a linear or branched alkyl residue, with a number of carbon atoms ranging, from 1 to 3 or another phosphonate group -P(O) (OR¹)₂, and preferably represents -P(O) (OCH₃)₃ or -P(O)(OEt)₂;
n and n' are numbers which may have identical or different values equal to 1, 2 or 3;
m may be equal to 0, 1, 2 or 3;
- and at least one acrylate diluent.

2. A process according to claim 1, **characterised in that** said liquid agent has a viscosity of less than 100 mPa·s.

3. A process according to claim 1 or 2, **characterised in that** said liquid agent is sprayed onto said elongate article in the form of an essentially conical jet.

4. A process according to claim 3, **characterised in that** said conical jet forms an angle α between 1° and 10°.

5. A process according to any one of claims 1 to 4, **characterised in that** said spraying is performed at a distance between 1 mm and 20 mm from said elongate article.

6. A process according to any one of claims 1 to 5, **characterised in that** said spraying stage is performed using a pressure of said liquid agent of between 0.1 and 2 bar.

7. A process according to any one of claims 4 to 6, **characterised in that** it comprises a stage which consists in determining a minimum spraying pressure for which said conical spraying jet is correctly formed, a stage which consists in determining a maximum spraying pressure for which said elongate article starts to vibrate under the effect of the spraying and a stage which consists in setting an optimal spraying pressure between said minimum pressure and said maximum pressure selected according to the speed of motion of said elongate article.

8. A process according to any one of claims 1 to 7, **characterised in that** said compound is selected from the group consisting of the compounds of the formulae:

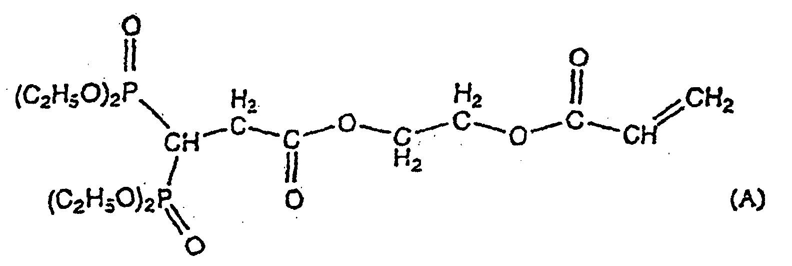

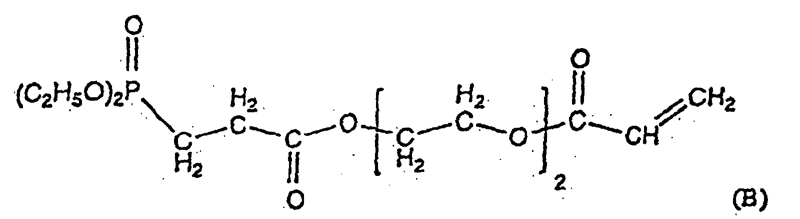

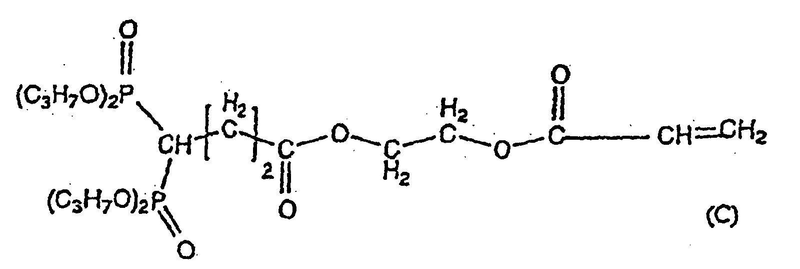

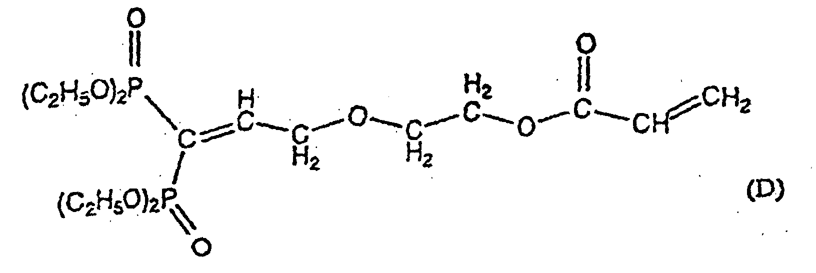

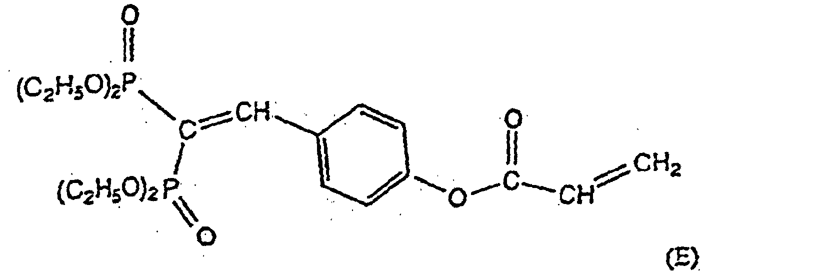

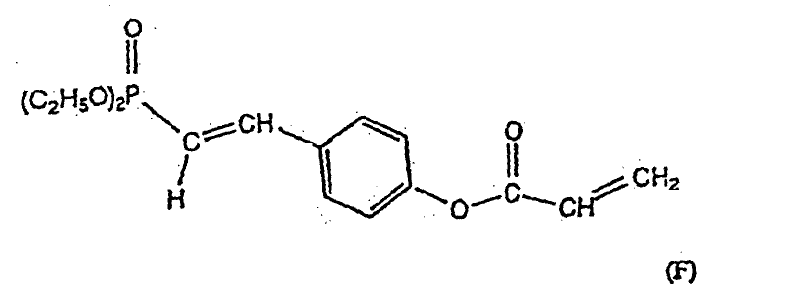

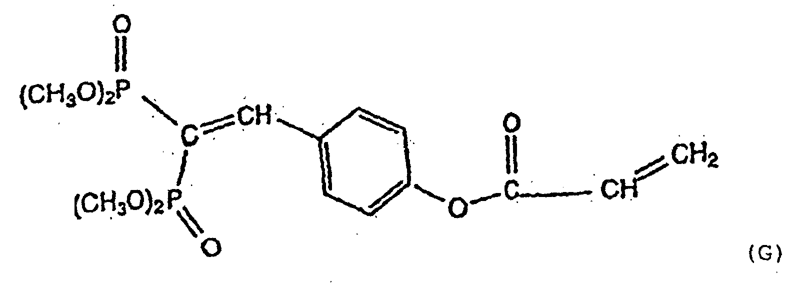

9. A process according to one of claims 1 to 8, **characterised in that** said liquid reactant is sprayed onto said elongate article to form a film of a thickness of between of a few hundred nanometres and a few micrometres.

10. A process according to any one of claims 1 to 9, **characterised in that** said acrylate diluent is selected from the group consisting of phenoxyethyl ether acrylate, ethoxyethyl acrylate, ethoxyethoxyethyl acrylate, trimethylolpropane triacrylate and isobornyl. acrylate.

11. A process according to one of claims 1 to 10, **characterised in that** said photopolymerisable liquid agent also comprises at least one photoinitiator compound.

12. A process according to one of claims 1 to 10, **characterised in that** it comprises a stage of forming on said elongate article at least one conventional or virtually conventional secondary coating film of a thickness of less than 60 µm, preferably of less than 40 µm.

13. A process according to one of claims 1 to 12, **characterised in that** said elongate article moves vertically.

14. Use of a device comprising spraying means (1, 2) for spraying at least one liquid agent onto an elongate article comprising at least one acrylophosphorus or methacrylophosphorus compound, said spraying means (1) comprising at last three spraying nozzles distributed equidistantly around said elongate article and capable of distributing said liquid agent in a: spraying cone for performing the process according to one of claims 1 to 13.

15. Use according to claim 14, **characterised in that** said spraying means (1, 2) are incorporated in a spraying chamber (3) provided with an inlet (4a) and an outlet (5a) and inside which said elongate article moves vertically.

16. Use according to one of claims 14 or 15, **characterised in that** said nozzles (1a) have an outlet of a diameter of between a few tens and a few hundred microns.

17. Use according to any one of claims 15 to 16, **characterised in that** said spraying chamber (3) comprises an excess sprayed liquid agent recovery trough (6).

18. Use according to claim 17, **characterised in that** said spraying means (1) comprise at least one tank (2) of said liquid agent and **in that** they comprise means for redirecting the recovered liquid agent in said trough (6) to said tank (2).

19. Use of an optical fibre drawing tower at least comprising a device (10) for spray deposition of a liquid agent for performing a process according to one of claims 11 to 13.

20. An optical fibre, **characterised in that** it comprises a silica core coated with at least one thin film produced from a liquid reactant of a thickness between a few hundred nanometres and a few micrometres obtained by the process according to one of claims 1 to 13.

21. An optical fibre according to claim 20, **characterised in that** said thin film is deposited directly on the silica.

22. An optical fibre according to one of claims 20 or 21, **characterised in that** it further comprises at least one conventional or virtually conventional coating film and **in that** said thin film forms:
- an intermediate film between two conventional coating films, or
- an outer protective film provided on a conventional or virtually conventional coating film.

23. An optical fibre according to the invention 20 to 22, **characterised in that** said thin film has a thickness of between a few hundred nanometres and a few micrometres.
